# EUROPEAN PATENT SPECIFICATION

(11) **EP 2 963 715 B1**
(45) Date of publication and mention of the grant of the patent: **08.03.2017**
(21) Application number: 15174002.4
(22) Date of filing: 26.06.2015
(51) Int. Cl.: H01M 8/04, H01M 8/24

(54) **FUEL CELL SYSTEM**
BRENNSTOFFZELLENSYSTEM
SYSTÈME DE PILE À COMBUSTIBLE

(30) Priority: 30.06.2014 JP 2014134696
(43) Date of publication of application: 06.01.2016
(73) Proprietor: AISIN SEIKI KABUSHIKI KAISHA, Kariya-shi, Aichi 448-8650 (JP); ROBERT BOSCH GMBH, 70442 Stuttgart (DE)
(72) Inventor: OHKAWARA, Hiroki, Kariya-shi,, Aichi 448-8650 (JP); KITAMURA, Takeshi, Kariya-shi,, Aichi 448-8650 (JP); NAKAMURA, Yoshiyuki, Kariya-shi, Aichi-ken, 448-8650 (JP); FRIEDE, Wolfgang, 70442 Stuttgart (DE)
(74) Representative: TBK

(56) References cited:
- EP-A1- 2 653 795
- US-A1- 2013 115 538
- US-A1- 2013 189 599

## Description

### [Technical Field]

The present invention relates to a fuel cell system.

### [Background Art]

As a type of fuel cell system, one disclosed in Patent Literature 1 is known. As illustrated in Fig. 1 of Patent Literature 1, a fuel cell system includes a fuel cell 2, a package 1 storing the fuel cell 2, a ventilation fan 6 ventilating the inside of the package 1, and a ventilation sensor 7 which detects an operation state of the ventilation fan 6. The ventilation sensor 7 detects a flow rate of a fluid (a ventilating amount) which is generated due to the ventilation of the ventilation fan 6. Since a fuel gas used to generate power in the fuel cell 2 is flammable, it is necessary to ensure safety in a case where the fuel gas leaks inside the package 1. Specifically, when the inside of the package 1 is ventilated, the ventilation fan 6 is controlled so that a ventilating amount of the inside of the package 1 becomes a predetermined ventilating amount or larger, in order to reduce a ratio of a fuel gas in a fluid which is discharged to the outside (atmosphere) from the package 1 via a ventilating outlet 5, to an extent of the fluid becoming inflammable. In addition, in a case where the ventilation sensor 7 detects that a ventilating amount by the ventilation fan 6 becomes smaller than the predetermined ventilating amount, an operation of the fuel cell system is stopped assuming that the ventilation fan 6 or the ventilation sensor 7 has failed.

Further, the fuel cell system controls temporarily to slow down or to stop the ventilation fan 6 so that a ventilating amount of the inside of the package 1 becomes smaller than the predetermined ventilating amount, and checks whether or not a ventilating amount detected by the ventilation sensor 7 is smaller than the predetermined ventilating amount so as to detect the failure of the ventilation sensor 7.

### [Prior Art Literature]

### [Patent Literature]

[Patent Literature 1] JP2009-70747A

### [Summary of the Invention]

### [Problems that the Invention is to Solve]

However, in the fuel cell system disclosed in Patent Literature 1, during the failure determination of the ventilation sensor 7 (a flow rate detection device), when a driving amount of the ventilation fan 6 is reduced so that a ventilating amount of the inside of the package 1 becomes smaller than the predetermined ventilating amount, there is a case where the fuel gas leaks inside the package 1, and a ratio of the fuel gas in the fluid which is discharged from the package 1 via the ventilating outlet 5 becomes an extent of the fluid being flammable. In addition, during the failure determination, when the driving of the ventilation fan 6 is stopped, there is a case where the fuel gas leaks inside the package 1, and the fuel gas leaks out of the package 1 through locations other than the ventilating outlet 5. In this case, for example, if the fuel cell system is provided indoors, fuel gas may not be discharged outdoors but may leak indoors.

Therefore, the present invention has been made in order to solve the above-described problems, and an object thereof is to provide a fuel cell system which can perform appropriate ventilation inside a housing even in a case where a fuel leaks inside the housing when reducing a driving amount of a ventilation fan in order to check abnormality of a flow rate detection device which detects a flow rate of a fluid generated by the ventilation.

### [Means for Solving the Problems]

In order to solve the problems, according to the invention of claim 1, there is provided a fuel cell system including: a fuel cell that generates power by using a fuel and an oxidant gas; a housing that stores the fuel cell; a ventilating device that includes a ventilation fan which performs ventilation of the inside of the housing, and a flow rate detection device which is disposed on a flow channel of a fluid which flows due to the ventilation when the ventilation of the inside of the housing is performed by the ventilation fan, and outputs an On signal in a case where a flow rate of the fluid is higher than a first flow rate and outputs an Off signal in a case where the flow rate of the fluid is equal to or lower than the first flow rate; and a control device that controls at least the ventilation fan. The first flow rate is set to be higher than a second flow rate corresponding to the maximum flow rate of a flow rate of the fluid which causes the fluid to become flammable in a case where the fluid contains a fuel. A part of the flow channel of the fluid is constituted by an exhaust portion through which the fluid discharged out of the housing flows during the ventilation. The ventilation fan is disposed in the exhaust portion. The control device includes a first abnormality checking portion that, after the control device starts control for driving the ventilation fan so as to ventilate the inside of the housing, reduces a driving amount of the ventilation fan from a first driving amount of the ventilation fan within an On-driving amount range in which an output signal from the flow rate detection device is an On signal to a second driving amount of the ventilation fan within an Off-driving amount range in which an output signal from the flow rate detection device is an Off signal and checks abnormality of the flow rate detection device by checking whether or not an output signal from the flow rate detection device changes from the On signal to the Off signal. The Off-driving amount range is set to be greater than zero and to be equal to or smaller than a first flow rate driving amount corresponding to the first flow rate, or the Off-driving amount range is set to be greater than a second flow rate driving amount corresponding to the second flow rate and to be equal to or smaller than the first flow rate driving amount.

With this configuration, when checking abnormality of the flow rate detection device, the first abnormality checking portion reduces a driving amount of the ventilation fan from the first driving amount of the ventilation fan within the On-driving amount range in which an output signal from the flow rate detection device is an On signal, to the second driving amount of the ventilation fan within the Off-driving amount range in which an output signal from the flow rate detection device is an Off signal in a case where there is no abnormality in the ventilating device. Here, in a case where the first abnormality checking portion reduces the driving amount of the ventilation fan to the second driving amount, since the ventilation fan is disposed in the exhaust portion through which the fluid discharged out of the housing flows during the ventilation, and the Off-driving amount range is set to be greater than zero, the pressure in the housing is negative pressure due to the ventilation performed by the ventilation fan. For this reason, when the first abnormality checking portion checks the abnormality of the flow rate detection device, the fuel is reliably ventilated along the flow channel of the fluid which flows due to the ventilation even in a case where the fuel leaks inside the housing. Therefore, for example, even if the fuel cell system is provided indoors, a fuel can be prevented from leaking indoors. Thus, when the first abnormality checking portion checks abnormality of the flow rate detection device, it is possible to appropriately perform ventilation of the inside of the housing even in a case where the driving amount of the ventilation fan is reduced.

In addition, according to the fuel cell system according to claim 2, in the fuel cell system of claim 1, the flow rate detection device may be a differential pressure switch including a first opening portion that is open on the flow channel of the fluid; a second opening portion that is open in a direction which is different from a direction of the first opening portion on the flow channel of the fluid; a first pressure chamber into which pressure of the fluid acting on the first opening portion is introduced; a second pressure chamber into which pressure of the fluid acting on the second opening portion is introduced; and a switch unit that outputs an On signal in a case where a pressure difference between the first pressure chamber and the second pressure chamber is greater than a predetermined pressure difference and outputs an Off signal in a case where the pressure difference is equal to or smaller than the predetermined pressure difference.

With this configuration, the flow rate detection device is a differential pressure switch which can be relatively easily configured, and thus the flow rate detection device can be configured relatively at a low cost. Therefore, it is possible to perform ventilation of the inside of the housing relatively at low cost and appropriately.

According to the fuel cell system according to claim 3, in the fuel cell system of claim 2, the flow rate detection device may further include a connection pipe that connects the first pressure chamber to the second pressure chamber; and a switching valve that is disposed on the connection pipe and switches a connection state in which the first pressure chamber and the second pressure chamber communicate with each other and a disconnection state in which the first pressure chamber and the second pressure chamber are disconnected from each other. The control device may further include a second abnormality checking portion that causes the connection pipe in the disconnection state to enter the connection state by controlling switching of the switching valve in a case where an output signal from the flow rate detection device is the On signal when the connection pipe is in the disconnection state through switching of the switching valve and a driving amount of the ventilation fan is reduced to the second driving amount by the first abnormality checking portion, and checks abnormality of the flow rate detection device by checking whether or not an output signal from the flow rate detection device changes from the On signal to the Off signal.

With this configuration, the control device can more reliably detect whether or not there is abnormality in the flow rate detection device by using the second abnormality checking portion. For this reason, it is possible to more appropriately ventilate the inside of the housing.

According to the fuel cell system according to claim 4, in the fuel cell system of claim 3, before the control device starts control for driving the ventilation fan so as to ventilate the inside of the housing, the second abnormality checking portion causes the connection pipe in the disconnection state to enter the connection state by controlling switching of the switching valve, and checks abnormality of the flow rate detection device by checking whether or not an output signal from the flow rate detection device is the Off signal.

With this configuration, the control device can easily check abnormality of the flow rate detection device before the ordinary ventilation control is started. Therefore, the control device can more appropriately perform ventilation of the inside of the housing.

### [Brief Description of the Drawings]

[Fig. 1] Fig. 1 is a schematic diagram illustrating a summary of an embodiment of a fuel cell system according to the present invention.
[Fig. 2] Fig. 2 is a sectional view of a flow rate detection device illustrated in Fig. 1.
[Fig. 3] Fig. 3 is a flowchart of a control program executed in the control device illustrated in Fig. 1.
[Fig. 4] Fig. 4 is a diagram illustrating a relationship between a temperature inside a housing, a flow rate of a fluid, and a driving amount of a ventilation fan in a case where a control device illustrated in Fig. 1 performs ventilation of the inside of the housing.
[Fig. 5] Fig. 5 is a flowchart of a control program in a second modification example of the embodiment of the fuel cell system according to the present invention.

### [Embodiment of the Invention]

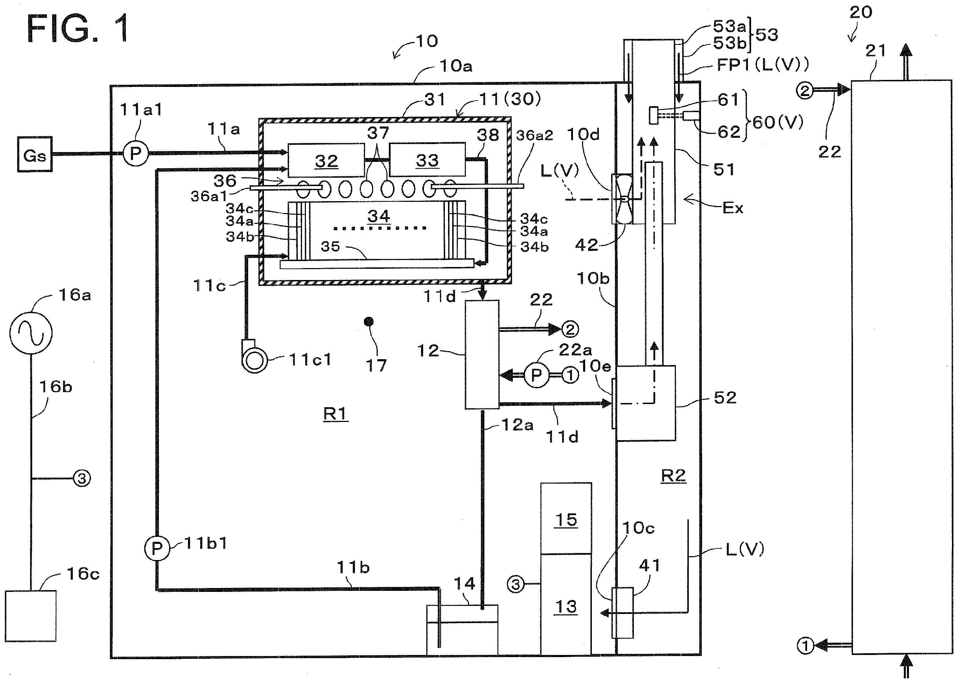

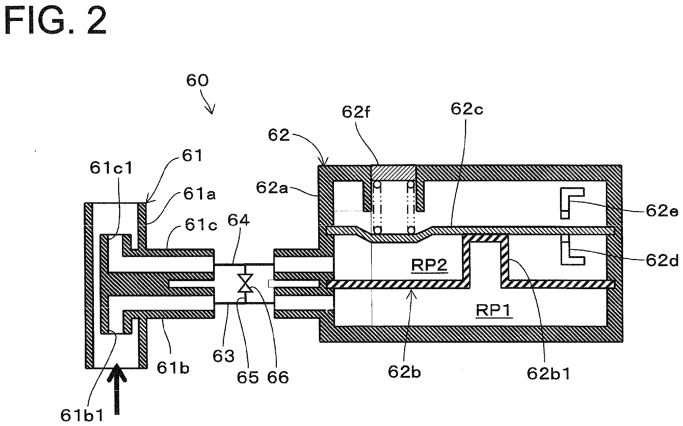

Hereinafter, a description will be made of an embodiment of a fuel cell system according to the present invention. In addition, in the present specification, for convenience of description, an upper side and a lower side in Figs. 1 and 2 will be described as an upper side and a lower side of the fuel cell system. As illustrated in Fig. 1, the fuel cell system includes a power generation unit 10 and a hot-water storage tank 21. The power generation unit 10 includes a housing 10a, a fuel cell module 11, a heat exchanger 12, an inverter device 13, a water tank 14, and a control device 15.

The fuel cell module 11 is configured to include at least a fuel cell 34 as will be described later. The fuel cell module 11 is supplied with a reforming material, reforming water, and cathode air. Specifically, the fuel cell module 11 is connected to the other end of a reforming material supply pipe 11 a of which one end is connected to a supply source Gs so as to be supplied with a reforming material. The reforming material supply pipe 11 a is provided with a material pump 11a1. In addition, the fuel cell module 11 is connected to the other end of a water supply pipe 11 b of which one end is connected to the water tank 14 so as to be supplied with reforming water. The water supply pipe 11 b is provided with a reforming water pump 11 b1. Further, the fuel cell module 11 is connected to the other end of a cathode air supply pipe 11c of which one end is connected to a cathode air blower 11 c1 so as to be supplied with cathode air.

The heat exchanger 12 is supplied with a combustion exhaust gas from the fuel cell module 11 and hot storage water from the hot-water storage tank 21, and exchanges heat between the combustion exhaust gas and the hot storage water. Specifically, the hot-water storage tank 21 stores hot storage water, and is connected to a hot storage water circulation line 22 along which the hot storage water is circulated (the hot storage water is circulated in an arrow direction in the figure). A hot storage water circulation pump 22a and the heat exchanger 12 are disposed in this order from a lower end of the hot-water storage tank 21 to an upper end thereof on the hot storage water circulation line 22. An exhaust pipe 11 d extending from the fuel cell module 11 is connected to (provided through) the heat exchanger 12. The heat exchanger 12 is connected to a condensed water supply pipe 12a which is connected to the water tank 14.

In the heat exchanger 12, a combustion exhaust gas from the fuel cell module 11 is guided into the heat exchanger 12 via the exhaust pipe 11 d, and exchanges heat with the hot storage water so as to be condensed and cooled. The condensed combustion exhaust gas is discharged to the outside via the exhaust pipe 11 d and a combustion exhaust duct 52 (which will be described later). In addition, the condensed water is supplied to the water tank 14 via the condensed water supply pipe 12a. Further, the water tank 14 purifies the condensed water by using an ion exchange resin.

An exhaust heat recovery system 20 is constituted by the above-described heat exchanger 12, the hot-water storage tank 21 and the hot storage water circulation line 22. The exhaust heat recovery system 20 recovers and accumulates exhaust heat of the fuel cell module 11 in the hot storage water.

In addition, the inverter device 13 coverts a DC voltage which is outputted from the fuel cell 34 into a predetermined AC voltage which is then outputted to a power source line 16b connected to an AC system power source 16a and an external power load 16c (for example, an electronic product). Further, the inverter device 13 receives an AC voltage from the system power source 16a via the power source line 16b and converts the AC voltage into a predetermined DC voltage which is then outputted to the auxiliary equipment (each pump or blower) or the control device 15. Still further, the control device 15 drives the auxiliary equipment so as to control an operation of the fuel cell system.

The fuel cell module 11 (30) includes a casing 31, an evaporation unit 32, a reforming unit 33, and the fuel cell 34. The casing 31 is made of a heat insulating material in a box form.

The evaporation unit 32 is heated by a combustion gas which will be described later, so as to evaporate the supplied reforming water and thus to generate vapor and also to preheat a supplied reforming material. The evaporation unit 32 mixes the vapor generated in the above-described way with the preheated reforming material and supplies the resulting mixture to the reforming unit 33. The reforming material includes a reforming gaseous fuel such as a natural gas or an LP gas, and a reforming liquid fuel such as kerosene, gasoline, or methanol, and a natural gas is used in the present embodiment.

The evaporation unit 32 is connected to the other end of the water supply pipe 11 b of which one end (lower end) is connected to the water tank 14. In addition, the evaporation unit 32 is connected to the reforming material supply pipe 11 a of which one end is connected to the supply source Gs. The supply source Gs is, for example, a gas supply conduit for town gas, or a gas cylinder for an LP gas.

The reforming unit 33 is heated by the above-described combustion gas and is supplied with heat required in a vapor reforming action, and generates and derives a reforming gas from the mixed gas (the reforming material and the vapor) supplied from the evaporation unit 32. The reforming unit 33 is filled with a catalyst (for example, an Ru or Ni-based catalyst), in which the mixed gas is reformed through a reaction with the catalyst, and thus gases including a hydrogen gas, carbon monoxide, and the like are generated (a so-called vapor reforming reaction). The reforming gas includes hydrogen, carbon monoxide, carbon dioxide, vapor, a non-reformed natural gas (methane gas), and reforming water (vapor) which is not used for reforming. As mentioned above, the reforming unit 33 generates a reforming gas (fuel) including the reforming material (raw fuel) and the reforming water and supplies the reforming gas to the fuel cell 34. In addition, the vapor reforming action is an endothermic reaction.

The fuel cell 34 is formed by stacking a fuel electrode, an air electrode (oxidant electrode), and a plurality of cells 34a made of an electrolyte which is interposed between both of the electrodes. The fuel cell of the present embodiment is a solid oxide fuel cell, and zirconium oxide which is a kind of solid oxide is used as an electrolyte. As a fuel, hydrogen, carbon monoxide, methane gas, or the like is supplied to the fuel electrode of the fuel cell 34. An operation temperature is 400°C to 1000°C. Not only hydrogen but also a natural gas or a coal gas may be used as direct fuel. In this case, the reforming unit 33 may be omitted.

A fuel flow channel 34b along which a reforming gas which is a fuel is circulated is formed on the fuel electrode side of the cells 34a. An air flow channel 34c along which air (cathode air) which is an oxidant gas is circulated is formed on the air electrode side of the cells 34a.

The fuel cell 34 is provided on a manifold 35. The manifold 35 is supplied with a reforming gas from the reforming unit 33 via a reformed gas supply pipe 38. A lower end (one end) of the fuel flow channel 34b is connected to a fuel outlet of the manifold 35, and a reforming gas which is guided out from the fuel outlet is guided into the lower end thereof and is guided out from an upper end thereof. The cathode air which is delivered by the cathode air blower 11 c1 is supplied via the cathode air supply pipe 11c, and is guided into a lower end of the air flow channel 34c and is guided out from an upper end thereof.

A combustion unit 36 is provided between the fuel cell 34, and the evaporation unit 32 and the reforming unit 33. The combustion unit 36 burns anode off gas (fuel off gas) from the fuel cell 34 and cathode off gas (oxidant off gas) from the fuel cell 34 so as to heat the reforming unit 33.

In the combustion unit 36, the anode off gas is burnt, and thus flames 37 are generated. In the combustion unit 36, the anode off gas is burnt, and thus a combustion exhaust gas is generated. A pair of ignition heaters 36a1 and 36a2 for igniting the anode off gas is provided in the combustion unit 36.

The housing 10a is divided into a fuel cell chamber R1 and an exhaust duct chamber R2 by an intermediate panel 10b. The fuel cell module 11, the heat exchanger 12, the inverter device 13, the water tank 14, and the control device 15 are disposed in the fuel cell chamber R1. A ventilation exhaust duct 51 and a combustion exhaust duct 52 are disposed in the exhaust duct chamber R2.

The intermediate panel 10b is provided with an intake port 10c for sucking external air into the fuel cell chamber R1, a ventilation exhaust port 10d for discharging air inside the fuel cell chamber R1 to the outside, and a combustion exhaust gas exhaust port 10e for discharging a combustion exhaust gas from the heat exchanger 12 to the outside. The intake port 10c is provided with a check valve 41. The check valve 41 allows a flow of air from the exhaust duct chamber R2 to the fuel cell chamber R1 but restricts a reverse flow.

The ventilation exhaust port 10d is provided with a ventilation fan 42. The ventilation fan 42 delivers air inside the fuel cell chamber R1 to the outside. The ventilation exhaust port 10d is connected to the ventilation exhaust duct 51. The other end of the ventilation exhaust duct 51 is connected to an inner pipe 53a of a chimney unit 53. If the ventilation fan 42 is driven, air (ventilation exhaust) inside the fuel cell chamber R1 is discharged to the outside via the ventilation exhaust port 10d, the ventilation exhaust duct 51, and the inner pipe 53a of the chimney unit 53 (this flow is indicated by a dashed arrow).

The combustion exhaust gas exhaust port 10e is connected to one end of the combustion exhaust duct 52. The other end of the combustion exhaust duct 52 is merged into the ventilation exhaust duct 51. A combustion exhaust gas, which is discharged from the fuel cell module 11 during a generation of power in the fuel cell system, is guided out to the ventilation exhaust duct 51 via the combustion exhaust gas exhaust port 10e and the combustion exhaust duct 52 (this flow is indicated by a dotted-chain arrow), and is merged into the ventilation exhaust so as to be discharged to the outside via the ventilation exhaust duct 51 and the inner pipe 53a of the chimney unit 53.

The chimney unit 53 has a double-pipe structure, and is formed of the inner pipe 53a and an outer pipe 53b. An intake flow channel FP1 is formed between the inner pipe 53a and the outer pipe 53b. The intake flow channel FP1 communicates with the outside and the exhaust duct chamber R2. External air flows (is sucked) into the exhaust duct chamber R2 via the intake flow channel FP1.

In addition, when ventilation of the inside of the housing 10a is performed by the ventilation fan 42, a flow channel L of a flow which flows due to the ventilation includes the intake flow channel FP1, a flow channel via which the intake flow channel FP1 communicates with the intake port 10c inside the exhaust duct chamber R2, and a flow channel via which the intake port 10c communicates with the ventilation exhaust port 10d inside the fuel cell chamber R1, the ventilation exhaust duct 51, and the inner pipe 53a of the chimney unit 53. Further, the ventilation exhaust port 10d, the ventilation exhaust duct 51, and the inner pipe 53a of the chimney unit 53 as a part of the flow channel L of a fluid constitute an exhaust portion Ex along which a fluid discharged from the housing 10a flows during ventilation.

In addition, the fuel cell system further includes a temperature sensor 17 and a flow rate detection device 60. The temperature sensor 17 is disposed inside the housing 10a, and detects a temperature Th of the inside of the housing 10a.

The flow rate detection device 60, which is disposed on the flow channel L of a fluid which flows due to ventilation when the inside of the housing 10a is ventilated by the ventilation fan 42, outputs an On signal if a flow rate Q of the fluid is greater than a switching flow rate Qk (which corresponds to a first flow rate in the claims and will be described later), and outputs an Off signal if the flow rate Q of the fluid is equal to or smaller than the switching flow rate Qk. In addition, a ventilating device V is constituted by the flow rate detection device 60, the check valve 41, the ventilation fan 42, and the flow channel L of a fluid which flows due to ventilation when the inside of the housing 10a is ventilated by the ventilation fan 42.

As illustrated in Fig. 2, the flow rate detection device 60 includes a pressure introducing unit 61, a switch unit 62, and a first connection pipe 63 and a second connection pipe 64 which connect the pressure introducing unit 61 to the switch unit 62.

The pressure introducing unit 61 is disposed inside the ventilation exhaust duct 51 (refer to Fig. 1), and introduces pressure of a fluid into the switch unit 62. As described above, in order for the combustion exhaust gas to flow into the ventilation exhaust duct 51 via the combustion exhaust duct 52, the pressure of a fluid introduced by the pressure introducing unit 61 is pressure of the fluid related to at least one of the ventilation exhaust and the combustion exhaust gas.

The pressure introducing unit 61 has the same function as that of a general Pitot tube. The pressure introducing unit 61 includes a throttle pipe 61 a, a first pressure introducing pipe 61 b, and a second pressure introducing pipe 61 c.

The throttle pipe 61 a is formed in a hollow cylindrical shape, and is disposed so as to follow a flow (indicated by a solid arrow) of a fluid and so that the fluid flows inside the throttle pipe 61 a.

One end of the first pressure introducing pipe 61 b is provided with a first opening portion 61b1 which is open downwards inside the throttle pipe 61 a. The entire pressure of a fluid which flows through the throttle pipe 61 a acts on the first opening portion 61b1 during ventilation. The entire pressure is pressure obtained by joining static pressure and dynamic pressure of the fluid. In addition, one end of the second pressure introducing pipe 61 c is provided with a second opening portion 61c1 which is open in a direction which is different from that of the first opening portion 61 b1 inside the throttle pipe 61 a. Specifically, the second opening portion 61c1 is open upwards. The static pressure of a fluid which flows through the throttle pipe 61 a acts on the second opening portion 61c1.

The switch unit 62 switches an On signal and an Off signal which are outputted from the flow rate detection device 60 on the basis of pressure of the fluid introduced by the pressure introducing unit 61. The switch unit 62 includes a housing 62a, a rolling element 62b, a movable piece 62c, a first fixed piece 62d, and a second fixed piece 62e.

The inside of the housing 62a is divided into a first pressure chamber RP1 and a second pressure chamber RP2 by the rolling element 62b. The first pressure chamber RP1 communicates with the first pressure introducing pipe 61 b via the first connection pipe 63. Consequently, the pressure (the entire pressure of the fluid which flows through the throttle pipe 61 a) acting on the first opening portion 61b1 is introduced into the first pressure chamber RP1.

The movable piece 62c, the first fixed piece 62d, and the second fixed piece 62e are disposed in the second pressure chamber RP2. The second pressure chamber RP2 communicates with the second pressure introducing pipe 61 c via the second connection pipe 64. Consequently, the pressure (the static pressure of the fluid which flows through the throttle pipe 61 a) acting on the second opening portion 61c1 is introduced into the second pressure chamber RP2.

The rolling element 62b is a diaphragm made of an elastic material so as to be elastically deformed.

The movable piece 62c is made of a conductive material so as to be elastically deformed in a plate shape. A lower surface of the movable piece 62c is in contact with a protruding end of a protrusion 62b1 formed at the rolling element 62b.

The first fixed piece 62d and the second fixed piece 62e are made of a conductive material, and are disposed with a gap therebetween and with the movable piece 62c interposed therebetween.

In addition, the flow rate detection device 60 further includes a third connection pipe 65 (corresponding to a connection pipe in the claims) and a switching valve 66. The third connection pipe 65 connects the first pressure chamber RP1 to the second pressure chamber RP2. Specifically, one end of the third connection pipe 65 is connected to the first connection pipe 63, and the other end of the third connection pipe 65 is connected to the second connection pipe 64. In other words, the third connection pipe 65 connects the first pressure chamber RP1 to the second pressure chamber RP2 via the first connection pipe 63 and the second connection pipe 64. In a case where the first pressure chamber RP1 is connected to the second pressure chamber RP2 via the third connection pipe 65, the first pressure chamber RP1 can communicate with the second pressure chamber RP2. In a case where the first pressure chamber RP1 communicates with the second pressure chamber RP2, a fluid can flow between the first pressure chamber RP1 and the second pressure chamber RP2.

The switching valve 66 is disposed in the third connection pipe 65. The switching valve 66 switches a connection state in which the third connection pipe 65 is opened and thus the first pressure chamber RP1 communicates with the second pressure chamber RP2 and a disconnection state in which the third connection pipe 65 is closed and thus the first pressure chamber RP1 is disconnected from the second pressure chamber RP2. The switching valve 66 is electrically connected to the control device 15. A switching operation of the switching valve 66 is controlled by the control device 15.

Here, in a case where the first pressure chamber RP1 and the second pressure chamber RP2 are in a disconnection state, and a pressure difference between both the pressure chambers RP1 and RP2 is equal to or smaller than a predetermined pressure difference, as illustrated in Fig. 2, the movable piece 62c is in contact with the first fixed piece 62d. At this time, an electric circuit configured to include the movable piece 62c, the first fixed piece 62d, and the second fixed piece 62e is in an open state. In this case, the flow rate detection device 60 outputs an Off signal to the control device 15. The predetermined pressure difference is a pressure difference corresponding to the dynamic pressure (a difference between the entire pressure and the static pressure) obtained when the flow rate Q of the fluid flowing through the throttle pipe 61 a is the switching flow rate Qk.

On the other hand, in a case where the first pressure chamber RP1 and the second pressure chamber RP2 are in a disconnection state, and a pressure difference between both the pressure chambers RP1 and RP2 is greater than the predetermined pressure difference, the movable piece 62c comes into contact with the second fixed piece 62e. At this time, the electric circuit is in a closed state. In this case, the flow rate detection device 60 outputs an On signal to the control device 15. In other words, when a pressure difference between both the pressure chambers RP1 and RP2 occurs, the rolling element 62b is deformed from a plate shape (illustrated in Fig. 2) to a shape which protrudes upwards. Therefore, the protrusion 62b1 presses the movable piece 62c upwards, and thus the movable piece 62c is deformed from a plate shape (illustrated in Fig. 2) to a shape which protrudes upwards. In addition, in a case where a pressure difference is greater than the predetermined pressure difference, the movable piece 62c comes into contact with the second fixed piece 62e.

As mentioned above, the flow rate detection device 60 is a differential pressure switch which switches an output on the basis of the predetermined pressure difference corresponding to the dynamic pressure of the switching flow rate Qk. In addition, the magnitude of the predetermined pressure difference, further, the magnitude of the switching flow rate Qk can be adjusted by an adjustment unit 62f which is additionally included in the flow rate detection device 60.

On the other hand, in a case where the first pressure chamber RP1 and the second pressure chamber RP2 are in a connection state, a pressure difference between the first pressure chamber RP1 and the second pressure chamber RP2 no longer exists, and thus the movable piece 62c comes into contact with the first fixed piece 62d as illustrated in Fig. 2. Consequently, the electric circuit enters an open state, and thus an output signal from the flow rate detection device 60 is an Off signal.

Next, a description will be made of an example of a fundamental operation of the above-described fuel cell system. In a case where a start switch (not illustrated) is pressed and thus an operation is stated, or in a case where an operation is started according to a planed operation, the control device 15 starts an activation operation.

When the activation operation is started, the control device 15 operates the auxiliary equipment. Specifically, the control device 15 operates the pumps 11a1 and 11 b1 so as to start the supply of a reforming material and condensed water (reforming water) to the evaporation unit 32. In addition, in the combustion unit 36, a reforming material and a reforming gas guided out from the fuel cell 34 are ignited by the ignition heaters 36a1 and 36a2. If the reforming unit 33 reaches a predetermined temperature (for example, 600°C or higher), the activation operation is finished, and a power generation operation is started. During the power generation operation, the control device 15 controls the auxiliary equipment so that power generated by the fuel cell 34 becomes power consumed by the external power load 16c, and supplies a reforming gas and cathode air to the fuel cell 34.

In a case where a stop switch (not illustrated) is pressed and thus the power generation operation is stopped or the operation is stopped according to an operation plan during the power generation operation, the control device 15 performs a stop operation (stop process) of the fuel cell system. The control device 15 stops the supply of the reforming material and the condensed water to the evaporation unit 32 and stops the supply of the reforming gas and air to the fuel cell 34. If power generation of the fuel cell 34 using a remaining material is finished, the stop operation is finished.

If the stop operation is finished, the fuel cell system enters a standby state (standby time). The standby time corresponds to a power generation stop state (in other words, this state is a state in which none of the activation operation, the power generation operation, and the stop operation are being performed) of the fuel cell system, and is a state of waiting for a power generation instruction (turning-on of the start switch, or the like).

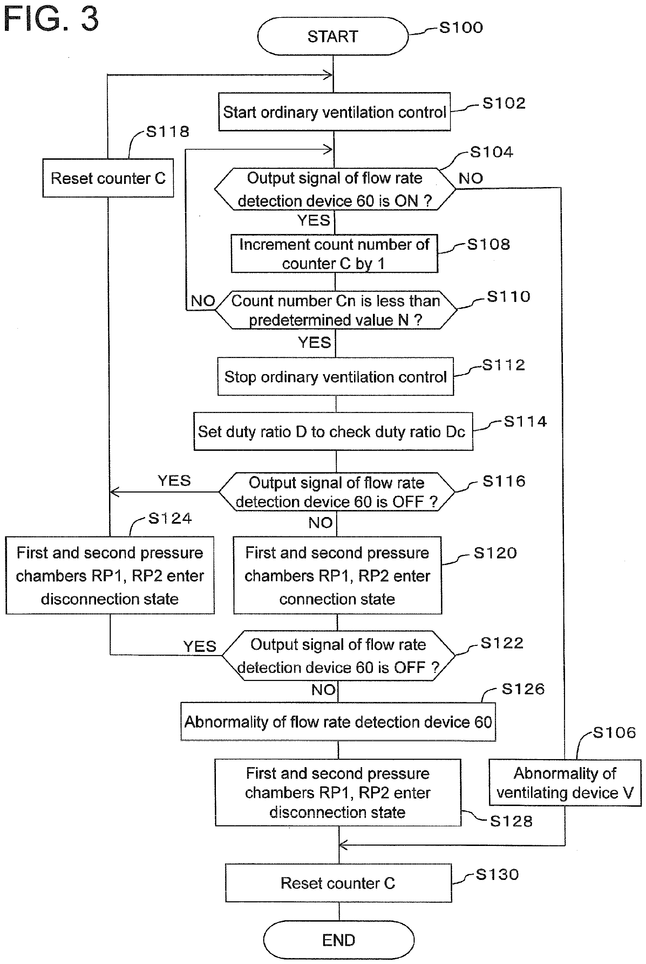

Next, with reference to a flowchart illustrated in Fig. 3, a description will be made of control for the control device 15 checking abnormality of the flow rate detection device 60 in the above-described fuel cell system. The description will be made from a case where the activation operation of the fuel cell system is started.

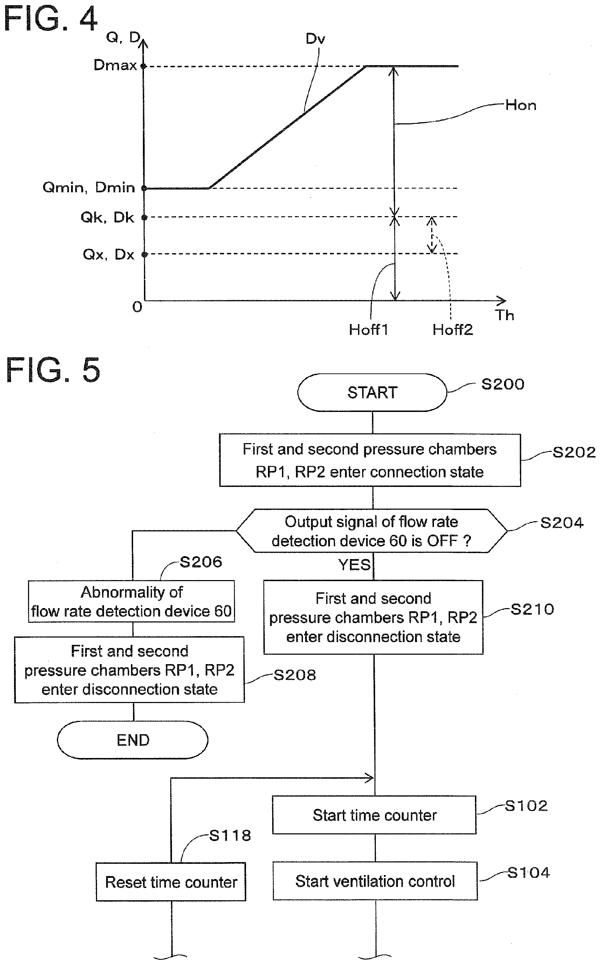

When the activation operation is started, the control device 15 starts ordinary ventilation control (step S102). The ordinary ventilation control is a control in which the control device 15 controls the ventilation fan 42 to ventilate the inside of the housing 10a during the activation operation, the power generation operation, and the stop operation. Here, the ordinary ventilation control will be described in detail. The ventilation fan 42 is driven through PWM control. The control device 15 outputs a driving amount (rotation speed) of the ventilation fan 42 to a driver circuit (not illustrated) of the ventilation fan 42 at a duty ratio D of the PWM control. A ventilation duty ratio Dv (corresponding to a first driving amount in the claims) which is outputted to the ventilation fan 42 during the ordinary ventilation control is defined depending on a temperature Th detected by the temperature sensor 17 as illustrated in Fig. 4. Specifically, the duty ratio D is set to become higher as the temperature Th becomes higher. Thus, the temperature Th is reduced as the driving amount of the ventilation fan 42 increases. In addition, the ventilation duty ratio Dv is set between the minimum duty ratio Dmin and the maximum duty ratio Dmax.

The minimum duty ratio Dmin is set in such a manner that a minimum flow rate Qmin is set to be larger than the switching flow rate Qk the minimum flow rate being a flow rate Q of a fluid flowing through the throttle pipe 61 a in the minimum driving amount of the ventilation fan 42 corresponding to the minimum duty ratio Dmin. In addition, the maximum duty ratio Dmax is set to, for example, 100%. In other words, the ventilation duty ratio Dv is higher than a switching duty ratio Dk (corresponding to a first flow rate driving amount in the claims) corresponding to the switching flow rate Qk. Consequently, during the ordinary ventilation control, in a case where there is no abnormality in the ventilating device V, the flow rate Q is higher than the switching flow rate Qk, and thus an output signal from the flow rate detection device 60 is an On signal. As mentioned above, the ventilation duty ratio Dv is set within an On-duty ratio range (corresponding to an On-driving amount range in the claims) Hon in which an output signal from the flow rate detection device 60 is an On signal.

In addition, the switching flow rate Qk is set to be higher than a predetermined discharge flow rate Qx (corresponding to a second flow rate in the claims). The predetermined discharge flow rate Qx corresponds to the maximum flow rate of the flow rate Q of a fluid which causes the fluid to become flammable, for example, in a case where a certain amount of fuel leaks into the housing 10a from the fuel cell module 11 and thus the fluid contains the fuel, during the ordinary ventilation control performed by the control device 15. In other words, the predetermined discharge flow rate Qx is a flow rate Q corresponding to the minimum fuel concentration of fuel which causes the fluid to be burnt when there is an ignition source in a case where the fluid contains the fuel. That is, in a case where the fluid contains the fuel, and the flow rate Q is equal to or lower than the predetermined discharge flow rate Qx, the fluid is burnt when there is an ignition source. On the other hand, in a case where the flow rate Q is higher than the predetermined discharge flow rate Qx, the fluid is not burnt even when there is an ignition source.

In addition, the control device 15 controls the switching valve 66 so that the third connection pipe 65 is in a closed state, and the first pressure chamber RP1 and the second pressure chamber RP2 are in a disconnection state, during the ordinary ventilation control.

The description continues to be made with reference to the flowchart of Fig. 3. During the above-described ordinary ventilation control, the control device 15 checks whether or not an output signal of the flow rate detection device 60 is an Off signal in step S104. As described above, during the ordinary ventilation control, a driving amount of the ventilation fan 42 is controlled at the ventilation duty ratio Dv within the On-duty ratio range Hon in which an output signal from the flow rate detection device 60 is an On signal. At this time, in a case where abnormality occurs in the ventilating device V, and the flow rate Q is equal to or lower than the switching flow rate Qk despite the ventilation fan 42 being controlled at the ventilation duty ratio Dv, an output signal from the flow rate detection device 60 becomes an Off signal. In this case, the control device 15 determines "NO" in step S104, and detects abnormality of the ventilating device V (step S106). The abnormality of the ventilating device V indicates, for example, a notable reduction in a driving amount of the ventilation fan 42 due to deterioration or the like of the ventilation fan 42, or a state in which the flow channel L of a fluid is nearly closed. In addition, the control device 15 resets a counter C (which will be described later) (step S130), then, for example, gives a warning or the like to a user, and stops the operation of the fuel cell system.

On the other hand, during the ordinary ventilation control, in a case where there is no abnormality in the ventilating device V, the flow rate Q is higher than the switching flow rate Qk, and thus an output signal from the flow rate detection device 60 is an On signal. In this case, the control device 15 detects that there is no abnormality in the ventilating device V, determines "YES" in step S104, and increments a count number Cn of the counter C by 1 (step S108). The counter C counts the number of times in which "YES" is determined in step S104. Further, the count number Cn is set to zero when a program is activated. Still further, the control device 15 determines whether or not a predetermined time period T has elapsed after the ordinary ventilation control is started (step S110). Specifically, the control device 15 determines whether or not the count number Cn of the counter C is equal to or greater than a predetermined value N. A time point at which the count number Cn reaches the predetermined value N corresponds to a time point at which the predetermined time period T has elapsed from the time at which the ordinary ventilation control is started. The predetermined time period T is, for example, 24 hours.

In a case where the predetermined time period T has not elapsed after the ordinary ventilation control is started, the control device 15 determines "NO" in step S110, and repeatedly performs the determination in step S106. On the other hand, in a case where the predetermined time period T has elapsed after the ordinary ventilation control is started, the control device 15 determines "YES" in step S110, and causes the program to proceed to step S112.

The control device 15 stops the ordinary ventilation control (step S112), and sets the duty ratio D of the ventilation fan 42 from the ventilation duty ratio Dv within an On-duty ratio range Hon to a check duty ratio (corresponding to a second driving amount in the claims) Dc (step S114). The check duty ratio Dc is the duty ratio D of the ventilation fan 42 within an Off-duty ratio range Hoff (corresponding to an Off-driving amount range in the claims) in which an output signal from the flow rate detection device 60 is an Off signal in a case where there is no abnormality in the ventilating device V. Specifically, the Off-duty ratio range Hoff is set to a first Off-duty ratio range Hoff1 which is greater than zero and is equal to or lower than the switching duty ratio Dk corresponding to the switching flow rate Qk (refer to Fig. 4). As mentioned above, the control device 15 reduces the duty ratio D in step S114 so that an output signal from the flow rate detection device 60 changes from an On signal to an Off signal.

In addition, the control device 15 checks whether or not an output signal from the flow rate detection device 60 is an Off signal, and thus checks whether or not there is abnormality in the flow rate detection device 60 (steps S112-S116: a first abnormality checking portion). In a case where there is no abnormality in the flow rate detection device 60, the flow rate Q becomes equal to or lower than the switching flow rate Qk when the duty ratio D of the ventilation fan 42 is reduced to the check duty ratio Dc, and thus an output signal from the flow rate detection device 60 becomes an Off signal. In this case, the control device 15 confirms that the flow rate detection device 60 is normal, and determines "YES" in step S116. In addition, the control device 15 resets the counter C (step S118), and restarts the ordinary ventilation control (step S102). As mentioned above, in a case where the ventilating device V operates normally, the control device 15 repeatedly checks abnormality of the flow rate detection device 60 in a periodic manner at intervals of the predetermined time period T during the ordinary ventilation control.

On the other hand, in a case where there is abnormality in the flow rate detection device 60, an output signal from the flow rate detection device 60 does not change from an On signal to an Off signal despite the flow rate Q being equal to or lower than the switching flow rate Qk when the duty ratio D of the ventilation fan 42 is reduced to the check duty ratio Dc. In this case, the control device 15 confirms that there is abnormality in the flow rate detection device 60, determines "NO" in step S116, and causes the program to proceed to step S120. In addition, the abnormality of the flow rate detection device 60 which is occurring at this time is a failure (hereinafter, referred to as an On failure) in which an output signal from the flow rate detection device 60 is still an On signal without changing to an Off signal.

The control device 15 controls switching of the switching valve 66 so that the third connection pipe 65 enters an open state and thus the first pressure chamber RP1 and the second pressure chamber RP2 enter a connection state (step S120), and checks whether or not an output signal from the flow rate detection device 60 changes from an On signal to an Off signal (steps S120, S122, S126: a second abnormality checking portion). In a case where the first pressure chamber RP1 and the second pressure chamber RP2 enter a connection state, a pressure difference between the first pressure chamber RP1 and the second pressure chamber RP2 no longer exists. At this time, in a case where an output signal from the flow rate detection device 60 changes from an On signal to an Off signal, the control device 15 can confirm that the flow rate detection device 60 operates normally. In this case, the control device 15 regards that, for example, since wind or the like flows into the housing 10a from the outside and flows out of the ventilation exhaust duct 51, the flow rate Q becomes higher than the switching flow rate Qk, and thus an output signal from the flow rate detection device 60 is an On signal at the time when the abnormality of the flow rate detection device 60 is checked in the above-described step S116 (the first abnormality checking portion). Therefore, the control device 15 determines that the check result in step S116 is wrong and there is no abnormality in the flow rate detection device 60. In this case, the control device 15 determines "YES" in step S122, and controls switching of the switching valve 66 so that the third connection pipe 65 enters a closed state and thus the first pressure chamber RP1 and the second pressure chamber RP2 enters a disconnection state (step S124). In addition, the control device 15 resets the count number of the counter (step S118), and restarts the ordinary ventilation control (step S102).

On the other hand, even when the first pressure chamber RP1 and the second pressure chamber RP2 are in a connection state, in a case where an output signal from the flow rate detection device 60 is still an On signal without changing from an On signal to an Off signal, the control device 15 can confirm that the check result in step S116 is not caused by an external factor but an On failure occurs in the flow rate detection device 60. In this case, the control device 15 determines "NO" in step S122 and detects abnormality of the flow rate detection device 60 (step S126). In this case, the control device 15 controls switching of the switching valve 66 so that the first pressure chamber RP1 and the second pressure chamber RP2 enter a disconnection state (step S128), resets the counter C (step S130), then, for example, gives a warning or the like to the user, and then stops the operation of the fuel cell system.

According to the present embodiment, the fuel cell system includes the fuel cell 34 which generates power by using a fuel and an oxidant gas; the housing 10a which stores the fuel cell 34; the ventilating device V including the ventilation fan 42 which ventilates the inside of the housing 10a, and the flow rate detection device 60 which is disposed on the flow channel L of a fluid which flows due to ventilation when the ventilation of the inside of the housing 10a is performed by the ventilation fan 42, and outputs an On signal in a case where the flow rate Q of the fluid is higher than the switching flow rate Qk and outputs an Off signal in a case where the flow rate Q of the fluid is equal to or lower than the switching flow rate Qk; and the control device 15 which controls at least the ventilation fan 42. The switching flow rate Qk is set to be higher than the predetermined discharge flow rate Qx corresponding to the maximum flow rate of the flow rate Q of the fluid which causes the fluid to become flammable in a case where the fluid contains the fuel. A part of the flow channel L of the fluid is constituted by the exhaust portion Ex through which the fluid discharged out of the housing 10a flows during the ventilation, and the ventilation fan 42 is disposed in the exhaust portion Ex. The control device 15 includes the first abnormality checking portion (steps S112-S116) which reduces the duty ratio D of the ventilation fan 42 from the ventilation duty ratio Dv of the ventilation fan 42 within the On-duty ratio range Hon in which an output signal from the flow rate detection device 60 is an On signal, to the check duty ratio Dc of the ventilation fan 42 within the Off-duty ratio range Hoff in which an output signal from the flow rate detection device 60 is an Off signal, and checks whether or not an output signal from the flow rate detection device 60 changes from an On signal to an Off signal so as to check abnormality of the flow rate detection device 60. The Off-duty ratio range Hoff is set to the first Off-duty ratio range Hoff1 which is greater than zero and is equal to or lower than the switching duty ratio Dk corresponding to the switching flow rate Qk.

Consequently, when checking abnormality of the flow rate detection device 60, the first abnormality checking portion reduces the duty ratio D of the ventilation fan 42 from the ventilation duty ratio Dv of the ventilation fan 42 within the On-duty ratio range Hon in which an output signal from the flow rate detection device 60 is an On signal, to the check duty ratio Dc of the ventilation fan 42 within the first Off-duty ratio range Hoff1 in which an output signal from the flow rate detection device 60 is an Off signal in a case where there is no abnormality in the ventilating device V. Here, in a case where the first abnormality checking portion reduces the duty ratio D of the ventilation fan 42 to the check duty ratio Dc, since the ventilation fan 42 is disposed in the ventilation exhaust port 10d of the exhaust portion Ex through which the fluid discharged out of the housing 10a flows during the ventilation, and the first Off-duty ratio range Hoff1 is set to be greater than zero, the pressure in the housing 10a is negative pressure due to the ventilation performed by the ventilation fan 42. For this reason, when the first abnormality checking portion checks abnormality of the flow rate detection device 60, the fuel is reliably ventilated along the flow channel L of the fluid which flows due to the ventilation even in a case where the fuel leaks inside the housing 10a. Therefore, for example, even if the fuel cell system is provided indoors, a fuel can be prevented from leaking indoors. Thus, when the first abnormality checking portion checks abnormality of the flow rate detection device 60, it is possible to appropriately perform ventilation of the inside of the housing 10a even in a case where the duty ratio D of the ventilation fan 42 is reduced.

In addition, the flow rate detection device 60 is a differential pressure switch including the first opening portion 61 b1 which is open on the flow channel L of a fluid; the second opening portion 61c1 which is open in a direction different from that of the first opening portion 61b1 on the flow channel L of the fluid; and the switch unit that includes the first pressure chamber RP1 into which pressure of the fluid acting on the first opening portion 61b1 is introduced and the second pressure chamber RP2 into which pressure of the fluid acting on the second opening portion 61c1 is introduced, and that outputs an On signal in a case where a pressure difference between the first pressure chamber RP1 and the second pressure chamber RP2 is greater than a predetermined pressure difference and outputs an Off signal in a case where the pressure difference is equal to or smaller than the predetermined pressure difference.

Consequently, the flow rate detection device 60 is a differential pressure switch which can be relatively easily configured, and thus the flow rate detection device 60 can be configured at a relatively low cost. Therefore, it is possible to perform ventilation of the inside of the housing 10a appropriately and at a relatively low cost.

Further, when the first abnormality checking portion checks abnormality of the flow rate detection device 60, the control device 15 detects abnormality of the flow rate detection device 60 in a case where an output signal from the flow rate detection device 60 does not change from an On signal to an Off signal although the first abnormality checking portion reduces the duty ratio D of the ventilation fan 42 to the check duty ratio Dc. Here, it is regarded that, when the first abnormality checking portion checks abnormality of the flow rate detection device 60, for example, in a case where a fluid (wind or the like) with a flow rate which causes an output signal from the flow rate detection device 60 to become an On signal flows into the housing 10a from the outside, the first abnormality checking portion checks abnormality if an output signal from the flow rate detection device 60 does not change from an On signal to an Off signal despite there being no abnormality in the ventilating device V, and thus the control device 15 detects abnormality of the flow rate detection device 60.

In contrast, the flow rate detection device 60 further includes the third connection pipe 65 which connects the first pressure chamber RP1 to the second pressure chamber RP2, and the switching valve 66 which is disposed on the third connection pipe 65 and switches a connection state in which the first pressure chamber RP1 and the second pressure chamber RP2 communicate with each other and a disconnection state in which the first pressure chamber RP1 and the second pressure chamber RP2 are disconnected from each other. The control device 15 further includes the second abnormality checking portion (steps S120, S122, S126) which causes the third connection pipe 65 in a disconnection state to enter a connection state by controlling switching of the switching valve 66 in a case where an output signal from the flow rate detection device 60 is an On signal when the third connection pipe 65 is in the disconnection state through switching of the switching valve 66 and the duty ratio D of the ventilation fan 42 is reduced to the check duty ratio Dc by the first abnormality checking portion, and checks abnormality of the flow rate detection device 60 by checking whether or not an output signal from the flow rate detection device 60 changes from the On signal to an Off signal.

Consequently, even in a case where the control device 15 detects abnormality of the flow rate detection device 60 on the basis of a check result from the first abnormality checking portion, the second abnormality checking portion causes the first pressure chamber RP1 and the second pressure chamber RP2 in a disconnection state to enter a connection state through controlling of switching of the switching valve 66 and thus checks whether or not an output signal from the flow rate detection device 60 changes from an On signal to an Off signal. Here, since the second abnormality checking portion controls switching of the switching valve 66 so that the first pressure chamber RP1 and the second pressure chamber RP2 communicate with each other, a pressure difference between the first pressure chamber RP1 and the second pressure chamber RP2 no longer exists. At this time, in a case where an output signal from the flow rate detection device 60 changes from an On signal to an Off signal, the flow rate detection device 60 operates normally, and thus the control device 15 detects that the check result from the first abnormality checking portion is wrongly derived, for example, due to an external factor such as wind, and there is no abnormality in the flow rate detection device 60. Therefore, the control device 15 can more reliably detect whether or not there is abnormality in the flow rate detection device 60 by using the second abnormality checking portion. For this reason, it is possible to more appropriately ventilate the inside of the housing 10a.

Next, a description will be made of a first modification example of the embodiment of the above-described fuel cell system focusing on differences from the above-described embodiment.

In the above-described embodiment, the Off-duty ratio range Hoff is set to the first Off-duty ratio range Hoff1 which is greater than zero and is equal to or lower than the switching duty ratio Dk. In contrast, in the present first modification example, the Off-duty ratio range Hoff is set to a second Off-duty ratio range Hoff2 which is greater than a predetermined discharge duty ratio Dx (corresponding to a second flow rate driving amount in the claims) corresponding to the predetermined discharge flow rate Qx and is equal to or lower than the switching duty ratio Dk.

The predetermined discharge flow rate Qx is a flow rate corresponding to the maximum flow rate of the flow rate Q of a fluid which causes the fluid to become flammable in a case where the fluid contains a fuel. Therefore, even in a case where a fuel leaks inside the housing 10a when the first abnormality checking portion reduces the duty ratio D of the ventilation fan 42 to the check duty ratio Dc, the flow rate Q of a fluid discharged out of the housing 10a is higher than the predetermined discharge flow rate Qx, and thus the fluid is inflammable. Thus, when the first abnormality checking portion checks abnormality of the flow rate detection device 60, it is possible to more appropriately ventilate the inside of the housing 10a even in a case where the duty ratio D of the ventilation fan 42 is reduced.

Next, a description will be made of a second modification example of the above-described embodiment of the fuel cell system focusing on differences from the respective embodiments with reference to Fig. 5.

In the above-described respective embodiments, the second abnormality checking portion (steps S120, S122, S126) checks abnormality of the flow rate detection device 60 after the ordinary ventilation control is started. In contrast, in the present second modification example, the second abnormality checking portion also checks abnormality of the flow rate detection device 60 before the ordinary ventilation control is started. Specifically, as illustrated in Fig. 5, when the activation operation is started, the control device 15 controls switching of the switching valve 66 so that the third connection pipe 65 enters an open state and thus the first pressure chamber RP1 and the second pressure chamber RP2 enter a connection state (step S202), and checks whether or not an output signal from the flow rate detection device 60 is an Off signal so as to check abnormality of the flow rate detection device 60 (step S204). At this time, since the ordinary ventilation control is not started and thus the ventilation fan 42 is not driven, the flow rate Q is zero (which is equal to or lower than the switching flow rate Qk).

Here, in a case where an On failure in which an output signal from the flow rate detection device 60 is still an On signal occurs in the flow rate detection device 60, the control device 15 can confirm that the On failure occurs in the flow rate detection device 60 since an output signal from the flow rate detection device 60 is an On signal despite the flow rate Q being equal to or lower than the switching flow rate Qk. In this case, the control device 15 determines "NO" in step S204 and detects that the flow rate detection device 60 is abnormal (step S206) (steps S202, S204 and S206: the second abnormality checking portion). In addition, the control device 15 controls switching of the switching valve 66 so that the first pressure chamber RP1 and the second pressure chamber RP2 enter a disconnection state (step S208), for example, gives a warning or the like to the user, and then stops the operation of the fuel cell system.

On the other hand, in a case where the flow rate detection device 60 is normal, the flow rate Q is equal to or lower than the switching flow rate Qk, and thus the flow rate detection device 60 outputs an Off signal. In this case, the control device 15 confirms that there is no abnormality in the flow rate detection device 60, determines "YES" in step S204, and controls switching of the switching valve 66 so that the first pressure chamber RP1 and the second pressure chamber RP2 enter a disconnection state (step S210). In addition, the control device 15 starts the ordinary ventilation control (step S102). In this step and the subsequent steps, the program is executed in the same manner as in the above-described respective embodiments.

Consequently, the control device 15 can easily check abnormality of the flow rate detection device 60 before the ordinary ventilation control is started. Therefore, the control device 15 can more appropriately perform ventilation of the inside of the housing 10a.

In addition, in the above-described embodiment, an example of the fuel cell system has been described, but the present invention is not limited thereto and may employ other configurations. For example, in the above-described second modification example, the second abnormality checking portion (step S204) is always executed before the ordinary ventilation control is started after the activation operation is started, but, alternatively, the second abnormality checking portion may be executed only in a case where it is checked that an output signal from the flow rate detection device 60 is an On signal after the activation operation is started. Since the flow rate Q is zero before the ordinary ventilation control is started, in a case where an output signal from the flow rate detection device 60 is an On signal, an On failure occurs in the flow rate detection device 60 or an external factor such as wind is present. Therefore, in this case, if the second abnormality checking portion is executed, it is possible to appropriately determine whether the On failure occurs in the flow rate detection device 60 or an external factor such as wind is present.

In addition, in the above-described respective embodiments, the ventilation fan 42 is disposed in the ventilation exhaust port 10d but may be disposed at other locations (for example, inside the ventilation exhaust duct 51) in the exhaust portion Ex.

Further, in the above-described respective embodiments, the first opening portion 61b1 is open downwards and the second opening portion 61c1 is open upwards, but, alternatively, the first opening portion and the second opening portion may be open in directions which are different from those in the above-described respective embodiments as long as the first opening portion 61 b1 is open in a direction in which the entire pressure of a fluid acts thereon and the second opening portion 61c1 is open in a direction in which the static pressure of the fluid acts thereon. For example, the second opening portion 61c1 may be open in the leftward direction.

In addition, in the above-described respective embodiments, the pressure introducing unit 61 of the flow rate detection device 60 is disposed inside the ventilation exhaust duct 51, but may be alternatively disposed on a flow channel L through which external air in the exhaust duct chamber R2 flows when ventilation is performed, or on a flow channel L through which a fluid inside the housing 10a flows.

Further, in the above-described respective embodiments, the flow rate detection device 60 is a differential pressure switch which introduces the entire pressure and the static pressure of a fluid and switches an output on the basis of a difference between the entire pressure and the static pressure, but may be alternatively a switch which detects the flow rate Q of a fluid and switches an output on the basis of the detected flow rate Q of the fluid.

### [Description of Reference Numerals and Signs]

10a: housing, 10d: ventilation exhaust, 15: control device, 34: fuel cell, 42: ventilation fan, 51: ventilation exhaust duct, 53: chimney unit, 60: flow rate detection device (differential pressure switch), 61: pressure introducing unit, 61b1: first opening portion, 61c1: second opening portion, 62: switch unit, 63: first connection pipe, 64: second connection pipe, 65: third connection pipe (connection pipe), 66: switching valve, Dc: check duty ratio (second driving amount), Dk: switching duty ratio (first flow rate driving amount), Dv: ventilation duty ratio (first driving amount), Dx: predetermined discharge duty ratio (second flow rate driving amount), Ex: exhaust portion, Hoff: off-duty ratio range (off-driving amount range), Hoff1: first off-duty ratio range, Hoff2: second off-duty ratio range, Hon: on-duty ratio range (on-driving amount range), L: flow channel of fluid, Qk: switching flow rate (first flow rate), Qx: predetermined discharge flow rate (second flow rate), RP1: first pressure chamber, RP2: second pressure chamber, V: ventilating device

A fuel cell system comprises a housing (10a) that stores the fuel cell (34), a ventilation fan (42) which performs ventilation of the inside of the housing, a flow rate detection device (60) that detects a flow rate (Q) of the fluid due to the ventilation, and the control device 15. The control device includes a first abnormality checking portion (S112-S116) that, after the control device starts control for driving the ventilation fan, reduces a driving amount (D) of the ventilation fan from a first driving amount (Dv) to a second driving amount (Dc) and checks abnormality of the flow rate detection device by checking whether or not an output signal from the flow rate detection device changes from the On signal to the Off signal.

## Claims

1. A fuel cell system comprising:
a fuel cell (34) that generates power by using a fuel and an oxidant gas;
a housing (10a) that stores the fuel cell;
a ventilating device (V) that includes a ventilation fan (42) which performs ventilation of the inside of the housing, and a flow rate detection device (60) which is disposed on a flow channel (L) of a fluid which flows due to the ventilation when the ventilation of the inside of the housing is performed by the ventilation fan, and outputs an On signal in a case where a flow rate (Q) of the fluid is higher than a first flow rate (Qk) and outputs an Off signal in a case where the flow rate (Q) of the fluid is equal to or lower than the first flow rate; and
a control device (15) that controls at least the ventilation fan, wherein
the first flow rate is set to be higher than a second flow rate (Qx) corresponding to the maximum flow rate of a flow rate of the fluid which causes the fluid to become flammable in a case where the fluid contains a fuel,
a part of the flow channel of the fluid is constituted by an exhaust portion (Ex) through which the fluid discharged out of the housing flows during the ventilation,
the ventilation fan is disposed in the exhaust portion,
the control device includes a first abnormality checking portion (S112-S116) that, after the control device starts control for driving the ventilation fan so as to ventilate the inside of the housing, reduces a driving amount (D) of the ventilation fan from a first driving amount (Dv) of the ventilation fan within an On-driving amount range (Hon) in which an output signal from the flow rate detection device is an On signal to a second driving amount (Dc) of the ventilation fan within an Off-driving amount range in which an output signal from the flow rate detection device is an Off signal and checks abnormality of the flow rate detection device by checking whether or not an output signal from the flow rate detection device changes from the On signal to the Off signal, and
the Off-driving amount range (Hoff1) is set to be greater than zero and to be equal to or smaller than a first flow rate driving amount (Dk) corresponding to the first flow rate, or the Off-driving amount range (Hoff2) is set to be greater than a second flow rate driving amount (Dx) corresponding to the second flow rate and to be equal to or smaller than the first flow rate driving amount.

2. The fuel cell system according to claim 1, wherein
the flow rate detection device is a differential pressure switch including
a first opening portion (61b1) that is open on the flow channel of the fluid;
a second opening portion (61c1) that is open in a direction which is different from a direction of the first opening portion on the flow channel of the fluid;
a first pressure chamber (RP1) into which pressure of the fluid acting on the first opening portion is introduced;
a second pressure chamber (RP2) into which pressure of the fluid acting on the second opening portion is introduced; and
a switch unit (62) that outputs an On signal in a case where a pressure difference between the first pressure chamber and the second pressure chamber is greater than a predetermined pressure difference and outputs an Off signal in a case where the pressure difference is equal to or smaller than the predetermined pressure difference.

3. The fuel cell system according to claim 2, wherein
the flow rate detection device further includes
a connection pipe (65) that connects the first pressure chamber to the second pressure chamber; and
a switching valve (66) that is disposed on the connection pipe and switches a connection state in which the first pressure chamber and the second pressure chamber communicate with each other and a disconnection state in which the first pressure chamber and the second pressure chamber are disconnected from each other,
the control device further includes a second abnormality checking portion (S120, S122, S126) that causes the connection pipe in the disconnection state to enter the connection state by controlling switching of the switching valve in a case where an output signal from the flow rate detection device is the On signal when the first abnormality checking portion cause the connection pipe to be in the disconnection state through switching of the switching valve and a driving amount of the ventilation fan is reduced to the second driving amount and checks abnormality of the flow rate detection device by checking whether or not an output signal from the flow rate detection device changes from the On signal to the Off signal.

4. The fuel cell system according to claim 3, wherein
before the control device starts control for driving the ventilation fan so as to ventilate the inside of the housing, the second abnormality checking portion (S202-S206) causes the connection pipe in the disconnection state to enter the connection state by controlling switching of the switching valve, and checks abnormality of the flow rate detection device by checking whether or not an output signal from the flow rate detection device is the Off signal.

## Patentansprüche

1. Brennstoffzellensystem, mit:
einer Brennstoffzelle (34), die Leistung erzeugt, indem sie einen Brennstoff und ein Oxidationsmittelgas verwendet;
einem Gehäuse (10a), das die Brennstoffzelle aufnimmt;
einer Ventilationsvorrichtung (V), die ein Ventilationsgebläse (42), das eine Belüftung des Inneren des Gehäuses durchführt, und eine Strömungsratenerfassungsvorrichtung (60) aufweist, die auf einem Strömungskanal (L) eines Fluids angeordnet ist, das infolge der Belüftung strömt, wenn die Belüftung des Inneren des Gehäuses durch das Ventilationsgebläse durchgeführt wird, und ein EIN-Signal in einem Fall ausgibt, in dem eine Strömungsrate (Q) des Fluids höher als eine erste Strömungsrate (Qk) ist und ein AUS-Signal in einem Fall ausgibt, in dem die Strömungsrate (Q) des Fluids gleich oder niedriger als die erste Strömungsrate ist; und
einer Steuervorrichtung (15), die mindestens das Ventilationsgebläse steuert, wobei
die erste Strömungsrate höher eingestellt ist als eine zweite Strömungsrate (Qx), die der maximalen Strömungsrate bei einer Strömungsrate des Fluids entspricht, die bewirkt, dass das Fluid in einem Fall brennbar wird, in dem das Fluid einen Brennstoff enthält;
ein Teil des Strömungskanals für das Fluid durch einen Auslassabschnitt (Ex) gebildet ist, durch den das während der Belüftung aus dem Gehäuse abgegebene Fluid fließt,
das Ventilationsgebläse in dem Auslassabschnitt angeordnet ist,
wobei die Steuervorrichtung einen ersten Anomalieprüfabschnitt (S112-S116) enthält, der, nachdem die Steuervorrichtung die Steuerung zum Antreiben des Ventilationsgebläses gestartet hat, um das Innere des Gehäuses zu belüften, einen Antriebsbetrag (D) des Ventilationsgebläses von einem ersten Antriebsbetrag (Dv) des Ventilationsgebläses innerhalb eines EIN-Antriebsbetragsbereichs (Hon), bei dem ein Ausgangssignal von der Strömungsratenerfassungsvorrichtung ein EIN-Signal ist, auf einen zweiten Antriebsbetrag (Dc) des Ventilationsgebläses innerhalb eines AUS-Antriebsbetragsbereichs, in dem ein Ausgangssignal von der Strömungsratenerfassungsvorrichtung ein AUS-Signal ist, vermindert und eine Anomalie der Strömungsratenerfassungsvorrichtung überprüft, indem geprüft wird, ob ein Ausgangssignal von der Strömungsratenerfassungsvorrichtung von dem EIN-Signal zu dem AUS-Signal wechselt oder nicht, und
der AUS-Antriebsbetragsbereich (Hoff1) größer als Null und gleich oder kleiner als ein erster Strömungsratenantriebsbetrag (Dk) entsprechend der ersten Strömungsrate eingestellt ist, oder der AUS-Antriebsbetragsbereich (Hoff2) größer als ein zweiter Strömungsratenantriebsbetrag (Dx) entsprechend der zweiten Strömungsrate und gleich oder kleiner als der erste Strömungsratenantriebsbetrag eingestellt ist.

2. Brennstoffzellensystem nach Anspruch 1, wobei
die Strömungsratenerfassungsvorrichtung ein Differenzdruckschalter ist, mit
einem ersten Öffnungsabschnitt (61b1), der offen auf dem Strömungskanal des Fluids ist;
einem zweiten Öffnungsabschnitt (61c1), der in einer Richtung offen ist, die von einer Richtung des ersten Öffnungsabschnitts auf dem Strömungskanal des Fluids verschieden ist;
einer ersten Druckkammer (RP1), in die der Druck des Fluids, das auf den ersten Öffnungsabschnitt wirkt, eingeführt wird;
einer zweiten Druckkammer (RP2), in die Druck des Fluids, das auf den zweiten Öffnungsabschnitt wirkt, eingeführt wird; und
einer Schaltereinheit (62), die ein EIN-Signal in einem Fall ausgibt, in dem eine Druckdifferenz zwischen der ersten Druckkammer und der zweiten Druckkammer größer als eine vorbestimmte Druckdifferenz ist, und ein AUS-Signal in einem Fall ausgibt, in dem die Druckdifferenz gleich oder kleiner als die vorbestimmte Druckdifferenz ist.

3. Brennstoffzellensystem nach Anspruch 2, wobei die Strömungsratenerfassungsvorrichtung ferner
ein Verbindungsrohr (65), das die erste Druckkammer mit der zweiten Druckkammer verbindet; und
ein Umschaltventil (66) aufweist, das an dem Verbindungsrohr angeordnet ist und zwischen einem Verbindungszustand, in dem die erste Druckkammer und die zweite Druckkammer miteinander kommunizieren, und einem Trennzustand umschaltet, in dem die erste Druckkammer und die zweite Druckkammer voneinander getrennt sind,
wobei die Steuervorrichtung ferner einen zweiten Anomalieprüfabschnitt (S120, S122, S126) enthält, der bewirkt, dass das Verbindungsrohr von dem Trennzustand in den Verbindungszustand eintritt, indem das Umschalten des Umschaltventils in einem Fall gesteuert wird, in dem ein Ausgangssignal von der Strömungsratenerfassungsvorrichtung das EIN-Signal ist, wenn der erste Anomalieprüfabschnitt bewirkt, dass das Verbindungsrohr durch Umschalten des Umschaltventils in dem Trennzustand ist und ein Antriebsbetrag des Ventilationsgebläses auf den zweiten Antriebsbetrag verringert ist, und eine Anomalie der Strömungsratenerfassungsvorrichtung überprüft, indem überprüft wird, ob sich ein Ausgangssignal von der Strömungsratenerfassungsvorrichtung von dem EIN-Signal zu dem AUS-Signal ändert oder nicht.

4. Brennstoffzellensystem nach Anspruch 3, wobei, bevor die Steuereinrichtung die Steuerung zum Antreiben des Ventilationsgebläses startet, um das Innere des Gehäuses zu belüften, der zweite Anomalieprüfabschnitt (S202-S206) bewirkt, dass das Verbindungsrohr vom Trennzustand durch Steuern des Umschaltens des Umschaltventils in den Verbindungszustand eintritt, und eine Anomalie der Strömungsratenerfassungsvorrichtung prüft, indem geprüft wird, ob ein Ausgangssignal von der Strömungsratenerfassungsvorrichtung das AUS-Signal ist oder nicht.

## Revendications

1. Système de pile à combustible comprenant :
une pile à combustible (34) qui génère de l'énergie à l'aide d'un combustible et d'un gaz oxydant ;
une enceinte (10a) qui contient la pile à combustible ;
un dispositif de ventilation (V) qui comprend un ventilateur (42) qui assure la ventilation de l'intérieur de l'enceinte, et un dispositif de détection de débit (60) qui est disposé sur un canal d'écoulement (L) d'un fluide qui circule en raison de la ventilation lorsque la ventilation de l'intérieur de l'enceinte est assurée par le ventilateur, et délivre un signal d'activation lorsqu'un débit (Q) du fluide est supérieur à un premier débit (Qk), et délivre un signal de désactivation lorsque le débit (Q) du fluide est égal ou inférieur au premier débit ; et
un dispositif de commande (15) qui contrôle au moins le ventilateur, dans lequel
le premier débit est défini comme étant supérieur à un second débit (Qx) correspondant au débit maximal d'un débit de fluide qui provoque le fait que le fluide devient inflammable lorsque le fluide contient un combustible,
une partie du canal d'écoulement du fluide est constituée d'une partie d'échappement (Ex) par laquelle le fluide évacué de l'enceinte circule pendant la ventilation,
le ventilateur est disposé dans la partie d'échappement,
le dispositif de commande comprend une première partie de vérification d'anormalité (S112-S116) qui, une fois que le dispositif de commande a commencé à contrôler l'entraînement du ventilateur de façon à ventiler l'intérieur de l'enceinte, réduit une quantité d'entraînement (D) du ventilateur afin de passer d'une première quantité d'entraînement (Dv) du ventilateur dans des limites de quantité d'entraînement d'activation (Hon) dans lesquelles un signal de sortie qui provient du dispositif de détection de débit est un signal d'activation à une seconde quantité d'entraînement (Dc) du ventilateur dans des limites de quantité d'entraînement de désactivation dans lesquelles un signal de sortie qui provient du dispositif de détection de débit est un signal de désactivation, et vérifie l'anormalité du dispositif de détection de débit en vérifiant si un signal de sortie qui provient du dispositif de détection de débit passe ou non du signal d'activation au signal de désactivation, et
les limites de quantité d'entraînement de désactivation (Hoff1) sont définies comme étant supérieures à zéro et égales ou inférieures à une première quantité d'entraînement de débit (Dk) correspondant au premier débit, ou les limites de quantité d'entraînement de désactivation (Hoff2) sont définies comme étant supérieures à une seconde quantité d'entraînement de débit (Dx) correspondant au second débit, et égales ou inférieures à la première quantité d'entraînement de débit.

2. Système de pile à combustible selon la revendication 1, dans lequel
le dispositif de détection de débit est un pressostat différentiel comprenant
une première partie d'ouverture (61b1) qui est ouverte sur le canal d'écoulement du fluide ;
une seconde partie d'ouverture (61c1) qui est ouverte dans une direction qui est différente d'une direction de la première partie d'ouverture sur le canal d'écoulement du fluide ;
une première chambre de pression (RP1) dans laquelle la pression du fluide agissant sur la première partie d'ouverture est introduite ;
une seconde chambre de pression (RP2) dans laquelle la pression du fluide agissant sur la seconde partie d'ouverture est introduite ; et
une unité de commutation (62) qui fournit un signal d'activation lorsqu'une différence de pression entre la première chambre de pression et la seconde chambre de pression est supérieure à une différence de pression prédéterminée, et fournit un signal de désactivation lorsque la différence de pression est égale ou inférieure à la différence de pression prédéterminée.

3. Système de pile à combustible selon la revendication 2, dans lequel
le dispositif de détection de débit comprend en outre
un tuyau de raccordement (65) qui relie la première chambre de pression à la seconde chambre de pression ; et
une soupape de commutation (66) qui est disposée sur le tuyau de raccordement et qui déclenche un état de raccordement dans lequel la première chambre de pression et la seconde chambre de pression communiquent l'une avec l'autre, et un état de déconnexion dans lequel la première chambre de pression et la seconde chambre de pression sont déconnectées l'une de l'autre,
le dispositif de commande comprend en outre une seconde partie de vérification d'anormalité (S120, S122, S126) qui permet au tuyau de raccordement dans l'état de déconnexion de passer à l'état de raccordement en contrôlant l'activation de la soupape de commutation lorsqu'un signal de sortie fourni par le dispositif de détection de débit est le signal d'activation lorsque la première partie de vérification d'anormalité permet au tuyau de raccordement de se trouver dans l'état de déconnexion grâce à l'activation de la soupape de commutation, et une quantité d'entraînement du ventilateur est réduite à la seconde quantité d'entraînement, et vérifie l'anormalité du dispositif de détection de débit en vérifiant si un signal de sortie qui provient du dispositif de détection de débit passe ou non du signal d'activation au signal de désactivation.

4. Système de pile à combustible selon la revendication 3, dans lequel
avant que le dispositif de commande commence à contrôler l'entraînement du ventilateur de façon à ventiler l'intérieur de l'enceinte, la seconde partie de vérification d'anormalité (S202-S206) permet au tuyau de raccordement en état de déconnexion de passer à l'état de raccordement en contrôlant l'activation de la soupape de commutation, et vérifie l'anormalité du dispositif de détection de débit en vérifiant si un signal de sortie qui provient du dispositif de détection de débit est le signal de désactivation ou non.
